(19) Europäisches Patentamt
European Patent Office
Office européen des brevets

(11) Veröffentlichungsnummer: **0 411 406 A2**

(12) **EUROPÄISCHE PATENTANMELDUNG**

(21) Anmeldenummer: **90113912.1**

(22) Anmeldetag: **20.07.90**

(51) Int. Cl.[5]: **C08L 71/00**, C08L 81/02, C08L 51/04

(30) Priorität: **02.08.89 DE 3925522**

(43) Veröffentlichungstag der Anmeldung: **06.02.91 Patentblatt 91/06**

(84) Benannte Vertragsstaaten: **DE FR GB IT**

(71) Anmelder: **BAYER AG**

**D-5090 Leverkusen 1 Bayerwerk(DE)**

(72) Erfinder: **Eckel, Thomas, Dr.**
**Gneisenausstrasse 15a**
**D-4047 Dormagen 1(DE)**
Erfinder: **Fuhr, Karl, Dr.**
**Kruellsdyk 55**
**D-4150 Krefeld(DE)**
Erfinder: **Wittmann, Dieter, Dr.**
**Wolfskaul 4**
**D-5000 Koeln 80(DE)**
Erfinder: **Müller, Friedemann, Dr.**
**Am Steinacker 5**
**D-4040 Neuss(DE)**
Erfinder: **Ott, Karl-Heinz, Dr.**
**Paul-Klee-Strasse 54**
**D-5090 Leverkusen 1(DE)**

(54) **Wärmeformbeständige thermoplastische Formmassen.**

(57) Die Erfindung betrifft thermoplastische Formmassen aus aromatischen Polyethersulfonen, Polyarylensulfiden (PAS), vorzugsweise Polyphenylensulfid (PPS) und gepfropften, teilchenförmigen Kautschuken, ein Verfahren zur Herstellung der Formmassen durch Mischen der Komponenten bei erhöhter Temperatur und ihre Verwendung zur Herstellung von Formkörpern, vornehmlich durch Spritzguß.

EP 0 411 406 A2

# WÄRMEFORMBESTÄNDIGE THERMOPLASTISCHE FORMMASSEN

Die Erfindung betrifft thermoplastische Formmassen aus aromatischen Polyethersulfonen, Polyarylensulfiden (PAS), vorzugsweise Polyphenylensulfid (PPS) und gepfropften, teilchenförmigen Kautschuken, ein Verfahren zur Herstellung der Formmassen durch Mischen der Komponenten bei erhöhter Temperatur und ihre Verwendung zur Herstellung von Formkörpern, vornehmlich durch Spritzguß.

Polyarylensulfide sind teilkristalline Thermoplaste mit hoher Wärmeformbeständigkeit und sehr guter Beständigkeit gegenüber Chemikalien. Ihre Einsatzmöglichkeiten sind jedoch aufgrund einer geringen Zähigkeit beschränkt.

In der US -A-4 021 596 werden Mischungen von Polyphenylensulfiden mit Polyarylsulfonen beschrieben, die zu einer Verdoppelung der Kerbschlagzähigkeit führt. Aus der EP-A-142 825 ist bekannt, durch Mischen von Polyphenylensulfiden und Kautschuken die Kerbschlagzähigkeit zu erhöhen.

Die technische Aufgabe bestand darin, Blendsysteme für den Einsatz im Automobil- und Elektrosektor zu entwickeln, die die hohe Wärmeformbeständigkeit und die ausgezeichnete Chemikalienresistenz von Polyphenylensulfiden mit einer hohen Kerbschlagzähigkeit, wie sie beispielsweise Polycarbonat-Blends haben, verknüpfen.

Es wurde nun gefunden, daß sich dieses angestrebte Eigenschaftsprofil über ein Blendsystem aus aromatischen Polyethersulfonen, Polyarylensulfiden, vorzugsweise Polyphenylensulfid und speziellen Pfropfkautschuken einstellen läßt. Die Kerbschlagzähigkeiten dieser Formmassen sind wesentlich gegenüber den in US-A 4 021 596 und EP-A 1 42 825 vorgeschlagen verbessert und liegen im Bereich von Polycarbonat-ABS-Blends.

Gegenstand der Erfindung sind thermoplastische Formmassen, enthaltend:

A. 5 bis 99, vorzugsweise 30 bis 97, insbesondere 40 bis 95 Gew.-Teile eines aromatischen Polyethersulfons,

B. 3 bis 95, vorzugsweise 4 bis 70, insbesondere 5 bis 50 Gew.-Teile eines Polyarylensulfids und

C. 1 bis 95, vorzugsweise 2 bis 60, insbesondere 3 bis 40 Gew.-Teile eines Pfropfpolymerisats harzbildender Monomerer (Pfropfmonomere) auf einen Kautschuk (Pfropfgrundlage).

Als Komponente A werden aromatische Polyethersulfone, bevorzugt lineare, thermoplastische Polyarylenpolyethersulfone, in welchen die Aryleneinheiten über Ether- und/oder Sulfongruppen verbunden sind, eingesetzt. Man erhält sie z.B. durch Umsetzung eines Alkalimetalldoppelsalzes eines zweiwertigen Phenols (Bisphenols) mit einer zwei Halogenatome enthaltenden benzoiden Verbindung, wobei mindestens einer der beiden Reaktanten eine Sulfongruppe ($-SO_2-$) enthält. Polyethersulfone sowie ihre Herstellung sind bekannt (z.B. US-A-3 264 536, GB-A1 264 900, EP-A-38 028).

Erfindungsgemäß verwendbare Polyethersulfone A enthalten wiederkehrende Einheiten der Formel (I)

[-O-Z-O-W-] (I),

worin

Z den Rest eines zweiwertigen Phenols und

W den Rest der benzoiden Verbindung mit einer inerten, elektronenanziehenden Gruppe bedeutet, und wobei Z und W durch aromatische Kohlenstoffatome über Valenzbindungen an die Sauerstoffatome gebunden sind und mindestens einer der Reste Z und W eine Sulfongruppe zwischen aromatischen Kohlenstoffatomen besitzt.

Bevorzugte Diphenole für die Herstellung der aromatischen Polyethersulfone A sind Verbindungen der Formel (II)

HO - Z - OH (II),

worin

Z einen zweiwertigen, ein- oder mehrkernigen aromatischen Rest mit 6 bis 30 C-Atomen bedeutet, und die beiden OH-Gruppen direkt an C-Atome gebunden sind.

Besonders bevorzugte Diphenole entsprechen der Formel (III)

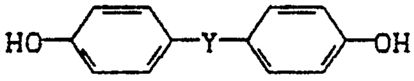 (III),

in der

Y eine Einfachbindung, einen Alkylen- oder Alkylidenrest mit 1 bis 7 C-Atomen, einen Cycloalkylen- oder

Cycloalkylidenrest mit 5 bis 12 C-Atomen, -O-, -S-,

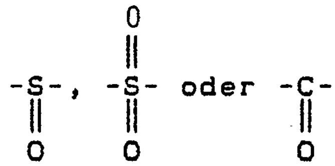 oder bedeutet,

sowie deren kern($C_1$-$C_4$)alkylierte und kernhalogenierte (Cl, Br) Derivate.

Beispiele für Diphenole sind Hydrochinon, Resorcin, Dihydroxybiphenyle, Bis-(hydroxyphenyl)-alkane, Bis-(hydroxyphenyl)-cycloalkane, Bis-(hydroxyphenyl)-ether, Bis-(hydroxyphenyl)-ketone, Bis-(hydroxyphenyl)-sulfoxide, Bis-(hydroxyphenyl)-sulfone und $\alpha,\alpha'$-Bis-(hydroxyphenyl)-diisopropylbenzole und entsprechende kern($C_1$-$C_4$)-alkylierte und kernhalogenierte (Cl, Br) Derivate.

Bevorzugte Diphenole sind Bisphenol A, Tetramethylbisphenol A, 1,1-Bis-(4-hydroxyphenyl)-isobutan, 1,1-Bis(4-hydroxyphenyl)-cyclohexan, 4,4'-Dihydroxybiphenyl, Bis-(4-hydroxyphenyl)-sulfid, Bis-(4-hydroxyphenyl)-sulfon sowie deren di- und tetrahalogenierte und alkylierte Derivate. Besonders bevorzugt ist Bisphenol A.

Es können auch beliebige Mischungen der Diphenole verwendet werden.

Besonders bevorzugte aromatische Polyethersulfone gemäß Komponente A werden aus Mischungen von Bisphenol A und Bis-(4-hydroxyphenyl)-sulfon hergestellt.

Bevorzugte aromatische Dihalogenverbindungen sind zweikernige Verbindungen der Formel (IV)

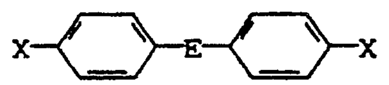 (IV),

in welcher

X für F, Cl, Br, I, und

E für zweiwertige elektronenanziehende Gruppen, wie Sulfon-, Carbonyl-, Vinyl-, Sulfoxid- oder Azo-Gruppen

steht.

Jeder der beiden Benzolringe kann mit einem oder mehreren gesättigten Kohlenwasserstoffresten oder elektronenanziehenden Gruppen substituiert sein.

Bevorzugte aromatische Dihalogenverbindungen (IV) sind Bis-(4-fluorphenyl)-sulfon, Bis-(4-chlorphenyl)-sulfon, 4,4'-Difluorbenzophenon und 4,4'-Dichlorbenzophenon.

Die aromatischen Polyethersulfone können auch verzweigt sein. Geeignete Verzweigungsmittel sind die für die Herstellung von aromatischen Polyestern (z.B. DE-A2 940 024) und für die Herstellung von aromatischen Polyestercarbonaten (z.B. DE-A-3 007 934) bekannten.

Als Kettenabbrecher bei der Herstellung der aromatischen Polyethersulfone A werden vorzugsweise Phenol, Alkylphenole mit $C_1$-$C_{12}$-Alkylgruppen und halogenierte (Cl, Br) Phenole sowie Bromide und Chloride von $C_1$-$C_{10}$-Alkanen in Mengen von 0,1 bis 10 Mol-% (im Falle von Phenolen, bezogen auf Diphenole, im Falle von Chloriden, bezogen auf die aromatischen Dihalogen-Verbindungen) verwendet.

Die reduzierten Viskositäten ($\eta_{red}$) der aromatischen Polyethersulfone A liegen im Bereich von 0,15 bis 1,5 dl/g, vorzugsweise von 0,35 bis 0,65 dl/g (gemessen an Lösungen von 20 mg Polyethersulfon A in 10 ml $CHCl_3$ bei 25° C).

Als Komponente B werden Polyarylensulfide, vorzugsweise Polyphenylensulfid, eingesetzt. Die Polyarylensulfide, vorzugsweise PPS, können linear, verzweigt oder vernetzt sein. Bevorzugt werden lineare oder wenig schwach verzweigte Produkte.

Geeignete Ausgangsverbindungen und Herstellungsverfahren sind beispielsweise in den US-A-3 354 129, 3 919 177 und in der EP-A-171 021 beschrieben. Sie sind auch handelsüblich, z.B. RYTON®, TEDUR®.

Bei ihrer Herstellung werden üblicherweise polyhalogenierte aromatische Verbindungen mit schwefelhaltigen Verbindungen in polaren organischen Lösungsmittel, gegebenenfalls in Gegenwart von Katalysatoren, umgesetzt.

Geeignete polyhalogenierte aromatische Verbindungen zur Herstellung der Polyarylensulfide sind beispielsweise 1,2-Dichlorbenzol, 1,3-Dichlorbenzol, 1,4-Dichlorbenzol, 2,5-Dichlortoluol, 1,4-Dibrombenzol, 2,5-Dibromanilin und andere, sowie deren Mischungen. Sollen verzweigte Polyarylensulfide hergestellt werden,

werden üblicherweise mindestens 0,05 Mol der polyhalogenierten aromatischen Verbindungen wie Tri- oder Tetrahalogenaromaten verwendet, wie beispielsweise 1,2,4-Trichlorbenzol, 1,3,5-Trichlorbenzol, 1,2,4,5-Tetrachlorbenzol, 1,3,5-(4-chlorphenyl)benzol usw.

Geeignete schwefelhaltige Verbindungen zur Herstellung der Polyarylensulfide sind Alkalisulfide wie beispielsweise Natrium- oder Kaliumsulfid. Vorzugsweise werden auch die Hydrate dieser Alkalisulfide eingesetzt. Die Alkalisulfide können auch aus Hydrogensulfiden mit Hilfe von Alkalihydroxiden wie Lithiumhydroxid, Natriumhydroxid oder Kaliumhydroxid erzeugt werden.

Als polare Lösungsmittel sind beispielsweise Lactame wie N-Methylpyrrolidon, N-Ethylpyrrolidon, N-Methylcarolactam, N-Ethylcaprolactam oder 1,3-Dimethylimidazolidinon geeignet.

Als Katalysatoren können beispielsweise Alkali (Li, Na, K) fluoride, -phosphate oder -carboxylate in Mengen von 0,02 bis 1,0 Mol pro Mol Alkalisulfid eingesetzt werden.

Die Pfropfpolymerisate der Komponente C stellen Polymerisate harzbildender Monomerer dar, die in Gegenwart von Kautschuken hergestellt worden sind. Sie umfassen z.B. Pfropfcopolymerisate mit kautschukelastischen Eigenschaften, die im wesentlichen aus mindestens 2 Monomeren wie Chloropren, Butadien-1,3, Isopropen, Styrol, Acrylnitril, Ethylen, Propylen, Vinylacetat, $C_1$-$C_8$-Methacrylaten und $C_1$-$C_8$-Acrylaten erhältlich sind. Es sind Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Thou ghened Plastics", Appl. Science Publishers, London 1977, beschrieben sind. Bevorzugte Polymerisate der Komponente C sind partiell vernetzt und besitzen Gelgehalte von über 20 Gew.-%, vorzugsweise über 40 Gew.-%, insbesondere über 60 Gew-%.

Bevorzugte Pfropfpolymerisate der Komponente C umfassen Pfropfpolymerisate aus:

C.1 5 bis 90, vorzugsweise 20 bis 80 Gew.-Teilen einer Mischung aus

C.1.1 50 bis 95 Gew.-Teilen Styrol, α-Methylstyrol, halogen- oder methylkernsubstituierten Styrolen, Methylmethacrylat oder Mischungen dieser Verbindungen und

C.1.2 5 bis 50 Gew.-Teilen Acrylnitril, Methacrylnitril, Methylmethacrylat, Maleinsäureanhydrid, $C_1$-$C_4$-alkyl- bzw. -phenyl-N-substituierten Maleinimiden oder Mischungen dieser Verbindungen auf

C.2 10 bis 95, vorzugsweise 20 bis 80 Gew.-Teilen Polymerisat mit einer Glasübergangstemperatur unter -10 °C.

Bevorzugte Pfropfpolymerisate der Komponente C sind z.B. mit Styrol und/oder Acrylnitril und/oder Methacrylaten und/oder Acrylaten gepfropfte Polybutadiene, Butadien/ Styrol-Copolymerisate und Acrylatkautschuke. Sie sind z.B. aus der DE-A-1 694 173 (= US-A-3 564 077) bekannt. Mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene sind z.B. aus der DE-A-2 348 377 (=US-A-3 919 353) bekannt.

Bevorzugte Polymerisate der Komponente C sind z.B. ABSPolymerisate, wie sie aus der DE-A-2 035 390 (= US-A-3 644 574) oder der DE-A-2 248 242 (=GB-A-1 409 275) bekannt sind.

Besonders bevorzugte Pfropfpolymerisate der Komponente C sind Pfropfpolymerisate, die durch Pfropfreaktion von

α. 10 bis 70, vorzugsweise 15 bis 50, insbesondere 20 bis 40 Gew.-%, bezogen auf Pfropfprodukt C, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester und 50 bis 90, vorzugsweise 65 bis 80 Gew.-%, bezogen auf Gemisch, Styrol, als Pfropfauflage C.1 auf

ß. 30 bis 90, vorzugsweise 50 bis 85, insbesondere 60 bis 80 Gew.-%, bezogen auf Pfropfprodukt C, eines Butadien-Polymerisats mit mindestens 50 Gew.-%, bezogen auf ß, Butadienresten als Pfropfgrundlage C.2 erhältlich ist,

wobei vorzugsweise der Gelanteil der Pfropfgrundlage 8 mindestens 70 Gew.-% (in Toluol gemessen), der Pfropfgrad G 0,15 bis 0,55 und der mittlere Teilchendurchmesser $d_{50}$ des Pfropfpolymerisats C 0,05 bis 2 µm, vorzugsweise 0,1 bis 0,6 µm beträgt.

(Meth-)Acrylsäureester α sind Ester der Acrylsäure oder Methacrylsäure und einwertiger Alkohole mit 1 bis 8 C-Atomen. Besonders bevorzugt sind Methacrylsäuremethylester, -ethylester, -propylester und -butylester, n-Butylacrylat und t-Butylacrylat.

Besonders bevorzugt ist eine Pfropfauflage aus Methacrylsäuremethylester und n-Butylacrylat im Mengenverhältnis 85:15 bis 98:2, sowie Mischungen davon mit t-Butylacrylat.

Die Pfropfgrundlage ß kann neben Butadienresten bis zu 50 Gew.-%, bezogen auf ß, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage ß besteht aus reinem

Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomere in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972)), 782-796) bestimmt werden.

Besonders bevorzugte Polymerisate der Komponente C sind z.B. auch Pfropfpolymerisate aus

$\tau$. 20 bis 90 Gew.-%, bezogen auf C, Acrylatkautschuk mit einer Glasübergangstemperatur unter -20 °C, als Pfropfgrundlage C.2 und

$\delta$. 10 bis 80 Gew.-%, bezogen auf C, mindestens eines polymerisierbaren, ethylenisch ungesättigten Monomeren, dessen bzw. deren in Abwesenheit von 1. entstandenen Homo- bzw. Copolymerisate eine Glasübergangstemperatur über 25 °C hätten, als Pfropfmonomere C.1.

Die Acrylatkautschuke $\tau$ der Polymerisate C sind vorzugsweise Polymerisate aus Acrylsäurealkylestern, gegebenenfalls mit bis zu 40 Gew.-%, bezogen auf $\tau$, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, z.B. Ethylenglykoldimethacrylat, Allylmethacrylat, mehrfach ungesättigte heterocyclische Verbindungen, z.B. Trivinyl- und Triallylcyanurat, polyfunktionelle Vinylverbindungen, wie Di- und Trivinylbenzole, Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzten Monomere beträgt vorzugsweise 0,02 bis 5, insbesondere 0,05 bis 2 Gew.-%, bezogen auf die Pfropfgrundlage $\tau$.

Bei cyclischen vernetzenden Monomeren mit mindestens 3 ethylenisch ungesättigten Gruppen werden etwa 1 Gew.-%, vorzugsweise weniger als 1 Gew.-%, bezogen auf Pfropfgrundlage $\tau$ eingesetzt.

Bevorzugte weitere polymerisierbare, ethylenisch ungesättigte Monomere, die neben den Acrylsäureestern gegebenenfalls zur Herstellung der Pfropfgrundlage $\tau$ dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage $\tau$ sind Emulsionspolymerisate, die einen Gelgehalt von mindestens 60 Gew.-% aufweisen.

Weitere geeignete Pfropfgrundlagen gemäß C.2 sind Silikonkautschuke mit pfropfaktiven Stellen, wie sie z.B. aus der DE-A-37 04 657, DE-A-37 04 655, DE-A-36 31 540, DE-A-36 31 539 bekannt sind.

Der Gelgehalt der Pfropfgrundlage C.2 wird bei 25 °C in Dimethylformamid bestimmt (M. Hoffmann, H. Krömer, R. Kuhn, Polymeranalytik I und II, Georg Thieme-Verlag, Stuttgart 1977).

Die erfindungsgemäßen Formmassen können weitere, für aromatische Polyethersulfone, Polyarylensulfide sowie Pfropfpolymerisate bekannte Zusätze, wie Stabilisatoren, Pigmente, Entformungsmittel, Flammschutzmittel, Antistatika usw. in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen, wie Innenknetern, Extrudern oder (Doppel)Wellenschnecken, schmelzcompoundiert oder schmelzextrudiert. Die einzelnen Komponenten können nacheinander oder gleichzeitig gemischt werden.

Die erfindungsgemäßen Formmassen können zur Herstellung von Formkörpern jeder Art z.B. durch Spritzgießen verwendet werden, Beispiele für Formkörper sind Gehäuseteile (z.B. für Haushaltsgeräte, wie Saftpressen, Kaffeemaschinen, Mixer), Abdeckplatten für das Baugewerbe oder Automobilteile. Sie können für elektrische Geräte, z.B. für Steckerleisten, eingesetzt werden, vorzugsweise wegen ihrer guten elektrischen Eigenschaften.

Formkörper können auch durch Tiefziehen aus vorher hergestellten Platten oder Folien hergestellt werden.

Beispiele

Komponente A:

856,1 Teile Bis-2,2-(4-hydroxyphenyl)-propan, 312,6 Teile Bis-(4-hydroxyphenyl)-sulfon und 1435,8 Teile Bis(4-chlor-phenyl)-sulfon werden unter Stickstoff in 5000 Teilen N-Methylpyrrolidon gelöst und mit 760 Teilen wasserfreiem Kaliumcarbonat versetzt. Das Reaktionsgemisch wird innerhalb von 30 Minuten auf 190° C erhitzt und dort für 4 Stunden gehalten, wobei ein Gemisch aus Wasser und N-Methylpyrrolidon abdestilliert. Nach einer Reaktionszeit von weiteren 4 Stunden wird das Reaktionsgemisch mit einem Liter N-Methylpyrrolidon verdünnt, auf 60 bis 70° C abgekühlt, in Methanol ausgefällt, mit Wasser gewaschen und im Vakuum getrocknet. Das Produkt besitzt eine reduzierte Viskosität von 0,51 dl/g ($CHCl_3$ bei 25° C).

Komponente B:

In einem mit Rührer und Destillationsaufsatz versehenen Autoklaven werden 1290 g Natriumsulfid-trihydrat (10 Mol $Na_2S$), 204,1 g Natriumacetat-trihydrat, ausreichend Natronlauge zur Neutralisation von Natriumhydrogensulfid und 5000 ml N-Methylpyrrolidon vorgelegt und auf 200° C erhitzt. Dabei destilliert eine Flüssigkeit ab, die im wesentlichen aus Wasser besteht.

Anschließend werden 1470 g 1,4-Dichlorbenzol, 14,5 g 1,2,4-Trichlorbenzol, gelöst in 500 ml N-Methylpyrroli don, zugegeben und das Reaktionsgemisch auf 240° C aufgeheizt und 5 Stunden bei dieser Temperatur belassen.

Das ausgefallene Produkt wird anschließend zur Entfernung von Restmengen anorganischer Salze mit Wasser elektrolytfrei gewaschen.

Das pulverförmige Produkt besitzt eine Schmelzviskosität von $\eta_m$ = 55 Pa.s.

Komponente C:

Pfropfpolymerisat hergestellt durch Emulsionspolymerisation aus 80 Gew.-% Pfropfgrundlage aus vernetztem Polybutadien (Gelgehalt 85 Gew.-% gemessen in Toluol) und 20 Gew.-% einer Pfropfauflage aus Methylmethacrylat und n-Butylacrylat im Verhältnis 9:1 mit einem mittleren Teilchendurchmesser $d_{50}$ = 0,4 µm.

Herstellung und Prüfung der erfindungsgemäßen Formmassen

Die Komponenten A, B und C wurden auf einem 1,3 l-Innenkneter bei Temperaturen zwischen 220 und 320° C aufgeschmolzen und homogenisiert.

Von den Formmassen wurden auf einer Spritzgußmaschine Stäbe der Abmessung 80 x 10 x 4 mm (Verarbeitungstemperatur: 270° C) hergestellt, an denen die Kerbschlagzähigkeit $a_k$ (nach Methode ISO 180) bei Raumtemperatur gemessen wurde.

Das Spannungsrißverhalten (ESC-Verhalten) wurde an Stäben der Abmessung 80 x 10 x 4 mm (Massetemperatur 270° C), gemäß DIN 53 449/3 untersucht. Als Kraftstoffsimulanz wurde eine Mischung aus 50 % Toluol und 50 % Isooctan verwendet. Die Probekörper wurden mittels einer Kreisbogenschablone vorgedehnt und 10 Minuten bei 23° C im Kraftstoffsimulanz gelagert. Die Vordehnung $\epsilon_x$ betrug 0,4 bis 2,4 %. Das Spannungsrißverhalten wurde über die Rißbildung bzw. den Bruch in Abhängigkeit der Vordehnung beurteilt.

Die Bestimmung der Wärmeformbeständigkeit nach Vicat B erfolgte gemäß DIN 53 460.

Tabelle

| Zusammensetzung und Eigenschaften der Formmassen | | | | | | |
|---|---|---|---|---|---|---|
| Beispiel | Komponenten | | | $a_k$ [kJ/m²] | Vicat B 120 [°C] | ESC-Verhalten Bruch bei $\epsilon_x$ [%] |
| | A | B | C | | | |
| | [Gew.-%] | | | | | |
| 1(Vergl.) | 80 | - | 20 | 25 | 178 | 2,4 |
| 2(Vergl.) | - | 80 | 20 | 4 | 180 | 2,4* |
| 3 | 70 | 10 | 20 | 47 | 176 | 2,4* |
| 4 | 60 | 20 | 20 | 62 | 172 | 2,4* |

* nach 10 Minuten keine Risse und kein Bruch.

Wie aus der voranstehenden Tabelle deutlich wird, zeigen die erfindungsgemäßen Formmassen (Beispiele 3,4) aus aromatischen Polyethersulfonen, Polyphenylensulfid (PPS) und Pfropfpolymerisat die durch das Polyphenylensulfid bestimmte günstige Eigenschaftskombination aus hoher Wärmeformbeständigkeit und ausgezeichnetem ESC-Verhalten.

Überraschenderweise wird jedoch durch den PPS-Zusatz die Kerbschlagzähigkeit nicht verschlechtert, sondern auf ein Wert-Niveau oberhalb demjenigen des Polyethersulfons angehoben (Vergleichsbeispiel 1).

## Ansprüche

1. Thermoplastische Formmassen enthaltend

A. 5 bis 99 Gew.-Teile eines aromatischen Polyethersulfons,

B. 3 bis 95 Gew.-Teile eines Polyarylensulfids und

C. 1 bis 95 Gew.-Teile eines Pfropfpolymerisats harzbildender Monomerer (Pfropfmonomere) auf einen Kautschuk (Pfropfgrundlage).

2. Formmassen gemäß Anspruch 1, dadurch gekennzeichnet, daß sie 40 bis 95 Gew.-Teile Komponente A und 5 bis 50 Gew.-Teile Komponente B enthalten.

3. Formmassen gemäß Anspruch 1, dadurch gekennzeichnet, daß sie 2 bis 60 Gew.-Teile eines Pfropfpolymerisats C enthalten.

4. Formmassen gemäß Anspruch 1, dadurch gekennzeichnet, daß die aromatischen Polyethersulfone A durch Cokondensation einer Mischung von Bisphenol A und Bis-(4-hydroxyphenyl)-sulfon erhältlich sind.

5. Formmassen gemäß Anspruch 1, dadurch gekennzeichnet, daß die Pfropfpolymerisate C aus

C.1 5 bis 90, vorzugsweise 20 bis 80 Gew.-Teilen einer Mischung aus

C.1.1 50 bis 95 Gew.-Teilen Styrol, α-Methylstyrol, halogen- oder alkylkernsubstituierten Styrolen, $C_2$-$C_8$-Alkylmethacrylaten, $C_1$-$C_8$-Alkylacrylaten oder Mischungen dieser Verbindungen und

C.1.2 5 bis 50 Gew.-Teilen Acrylnitril, Methacrylnitril, $C_1$-$C_8$-Alkylmethacrylaten, $C_1$-$C_8$-Alkylacrylaten, Maleinsäureanhydrid, $C_1$-$C_4$-alkyl- bzw. -phenyl-N-substituierten Maleinimiden oder Mischungen dieser Verbindungen auf

C.2 10 bis 95, vorzugsweise 20 bis 80 Gew.-Teilen Polymerisat mit einer Glasübergangstemperatur unter -10°C hergestellt werden.

6. Formmassen gemäß Anspruch 1, dadurch gekennzeichnet, daß die Polymerisate C.2 mit einer Glasübergangstemperatur unter -10°C Dienkautschuke, Alkylacrylatkautschuke, Silikonkautschuke, Ethylen-Propylen-Dien-Kautschuke sind.

7. Formmassen gemäß Anspruch 1, dadurch gekennzeichnet, daß die Pfropfauflage der Pfropfpolymerisate C Methacrylsäuremethylester und n-Butylacrylat enthält.

8. Formmassen gemäß Anspruch 1, dadurch gekennzeichnet, daß sie zusätzlich mindestens einen Zusatz, ausgewählt aus der Gruppe der Stabilisatoren, Pigmente, Fließhilfsmittel, Entformungsmittel, Flammschutzmittel und Antistatika enthalten.

9. Verwendung von Formmassen nach Anspruch 1 zur Herstellung geformter Körper.